# EUROPÄISCHE PATENTSCHRIFT

(11) **EP 0 590 545 B1**
(45) Veröffentlichungstag und Bekanntmachung des Hinweises auf die Patenterteilung: **07.02.1996**
(21) Anmeldenummer: 93115498.3
(22) Anmeldetag: 25.09.1993
(51) Int. Cl.: H02H 3/33, H02H 3/05

(54) **Fehlerstrom- oder Differenzstromschutzschalter**
Earth leakage or differential current circuit breaker
Disjoncteur à courant de défaut ou à courant différentiel

(30) Priorität: 30.09.1992 DE 4232702
(43) Veröffentlichungstag der Anmeldung: 06.04.1994
(73) Patentinhaber: ABB PATENT GmbH, D-68309 Mannheim (DE)
(72) Erfinder: Popa, Heinz, Dr., D-69251 Gaiberg (DE); Berthold, Rainer, D-69251 Gaiberg (DE); Wilbertz, Heribert, D-69412 Eberbach (DE)
(74) Vertreter: Rupprecht, Klaus, Dipl.-Ing.

(56) Entgegenhaltungen:
- WO-A-86/06889
- DE-A- 4 011 049

## Beschreibung

Die Erfindung betrifft einen Fehlerstrom- oder Differenzstromschutzschalter nach dem Oberbegriff des Anspruches 1.

Fehlerstrom- oder Differenzstromschutzschalter der eingangs genannten Art sind allgemein bekannt. Sie besitzen einen Summenstromwandler mit Ringkern, dessen Primärwicklung durch die Netzleiter gebildet ist, wobei die Netzleiter einfach durch den meist als Toroid ausgebildeten Ringkern hindurchgesteckt sind. Um den Ringkern ist weiterhin eine Sekundärwicklung herumgewickelt, die über eine Speicherschaltung mit einem Auslöserelais verbunden ist, das bei einem Auslösefall, wenn ein Fehlerstrom oder allgemein eine Differenz zwischen den in den durch den Ringkern geführten Hin- und Rückleitern fließenden Strömen auftritt, auf ein Schaltschloß einwirkt, mit dem Kontaktstellen in den Netzleitern geöffnet werden. Die Speicherschaltung speichert die an der Sekundärwicklung anstehende Energie und gibt sie, wenn sie ein vorgegebenes Niveau erreicht hat, über einen Schwellwertschalter an das Auslöserelais weiter.

Der Speicher, der Schwellwertschalter und das Auslöserelais sind so aufeinander abgestimmt, daß die im Auslösemoment gespeicherte Energie im allgemeinen zum Auslösen des Auslöserelais ausreicht. Wird z. B. ein Haltemagnetauslöser eingesetzt, dessen Anker von einem Permanentmagneten entgegen der Kraft einer Feder an das Joch angezogen wird, dann wird durch die im Speicher gespeicherte Energie der vom Permanentmagneten erlangte Permanent-Magnetfluß im Joch geschwächt, da der von dem vom Speicher abgegebenen Strom erzeugte Magnetfluß im Joch dem Permanent-Magnetfluß entgegen gerichtet ist; die Federkraft überwiegt die vom Restmagnetfluß erzeugte Anzugskraft und zieht den Anker vom Joch ab.

Nach längerer Betriebszeit des Magnetauslösers oder gegen Ende seiner Lebensdauer kann es aufgrund bestimmter Einflüsse vorkommen, daß die üblicherweise erzeugte maximale Anzugskraftabsenkung durch die im Speicher angesammelte Energie nicht ausreicht, den Anker zum Auslösen zu bringen. Der Anker des Magnetauslösers fällt dann nicht ab und der Fehlerstromschutzschalter schaltet das Netz mit dem Fehlerstrom nicht ab. Dies kann zu Gefährdungen von Menschen und Tieren führen.

Aufgabe der Erfindung ist es, einen Fehlerstrom- oder Differenzstromschutzschalter zu schaffen, bei dem die Betriebssicherheit auch nach längerer Betriebszeit oder gegen Ende seiner Lebensdauer gewährleistet ist.

Diese Aufgabe wird erfindungsgemäß gelöst durch die kennzeichnenden Merkmale des Anspruches 1.

Wenn im Fehlerstromfall die Speicherschaltung ihre Energie an das Auslöserelais abgibt, dann erfolgt dies wegen des Schwellwertschalters impulsartig, und der impulsartige Speicher-Entladestrom erzeugt im Auslöserelais eine für dieses Auslöserelais typische Spannungsänderung - erstes Impulssignal -, die über eine Signalleitung an die Speicherschaltung zurückgemeldet und dort ausgewertet wird. Erfolgt nun durch diesen Entlade-Stromimpuls die Auslösung des Auslöserelais, so wird durch die Bewegung des Relaisankers ein ebenfalls typischer Spannungsimpuls - zweites Impulssignal - erzeugt, der ebenfalls über die Signalleitung an die Auswerteschaltung in der Speicherschaltung zurückgemeldet wird. Beim Auftreten dieser im Millisekundenabstand aufeinanderfolgenden Impulssignale registriert die Auswerteschaltung innerhalb der Speicherschaltung, daß die Auslösung bestimmungsgemäß erfolgt ist. Spricht dabei das Auslöserelais nicht an, z. B. weil der Fehlerstromschutzschalter eine höhere Betriebszeit besitzt oder sich seine Betriebszeit dem Ende der Lebensdauer nähert, dann wird das zweite Impulssignal wegen Fehlens der Ankerbewegung nicht entstehen. Fehlt das zweite Impulssignal, so wird dies von der Auswerteschaltung detektiert und die von dem Speicher der Speicherschaltung abzugebende Auslöseenergie erhöht.

Erfindungsgemäß also besitzt die Speicherschaltung eine Auswerteschaltung, die über eine Signalleitung mit dem Auslöserelais verbunden ist und die die beim Auslösevorgang des Auslöserelais auftretenden Impulssignale detektiert.

Die Erhöhung der von der Speicherschaltung abzugebende Auslöseenergie kann gemäß den kennzeichnenden Merkmalen des Anspruches 2 dadurch erfolgen, daß die Auswerteschaltung die Triggerschwelle des Schwellwertschalters stufenweise höher stellt. Dadurch steigt die im Triggermoment im Speicher vorhandene Energie stufig an, und dadurch kann der z. B. durch Alterung angestiegene Energiebedarf des Auslöserelais bei einer bestimmten Stufe wieder gedeckt werden. Da dann das Auslöserelais ausgelöst und der Relaisanker sich bewegt hat, wird das zweite Impulssignal erzeugt, worauf von der Auswerteschaltung die erfolgreiche Auslösung registriert wird.

Es besteht natürlich auch die Möglichkeit, daß die Speicherschaltung zwei oder mehrere Schwellwertschalter aufweist, deren Schwellenwerte unterschiedlich sind; beim Ausbleiben des zweiten Impulssignals wird dann der Schwellwertschalter mit dem jeweils erforderlichen, nächsthöheren Schwellwert angesteuert. In zweckmäßiger Weise kann jedem Schwellwertschalter ein eigener Speicher zugeordnet sein.

Eine weitere vorteilhafte Ausgestaltung der Erfindung kann dahin gehen, daß der oder die Speicher mittels einer separaten Hilfswicklung des Wandlers aufladbar sind. Es besteht auch die Möglichkeit, eine eigene Hilfsspannungsquelle vorzusehen, mit der die weiteren Speicher aufgeladen werden oder aus der die notwendige Auslöseenergie direkt, ohne Zwischenschaltung eines Speichers entnommen wird. Die Hilfsspannungsquelle kann dabei das Netz sein, wobei ein Transformator vorgesehen ist, über den eine galvanische Trennung zwischen dem Speicher und dem Netz erzeugt wird.

Weitere vorteilhafte Ausgestaltungen und Verbesserungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Figur 1: eine erste schematische Schaltungsanordnung einer erfindungsgemäßen Speicherschaltung,
- Figur 2: eine schematische Darstellung einer zweiten Ausführungsform der Erfindung,
- Figur 3: eine schematische Darstellung einer dritten Ausführungsform der Erfindung und
- Figur 4: eine schematische Darstellung einer vierten Ausführungsform der Erfindung.

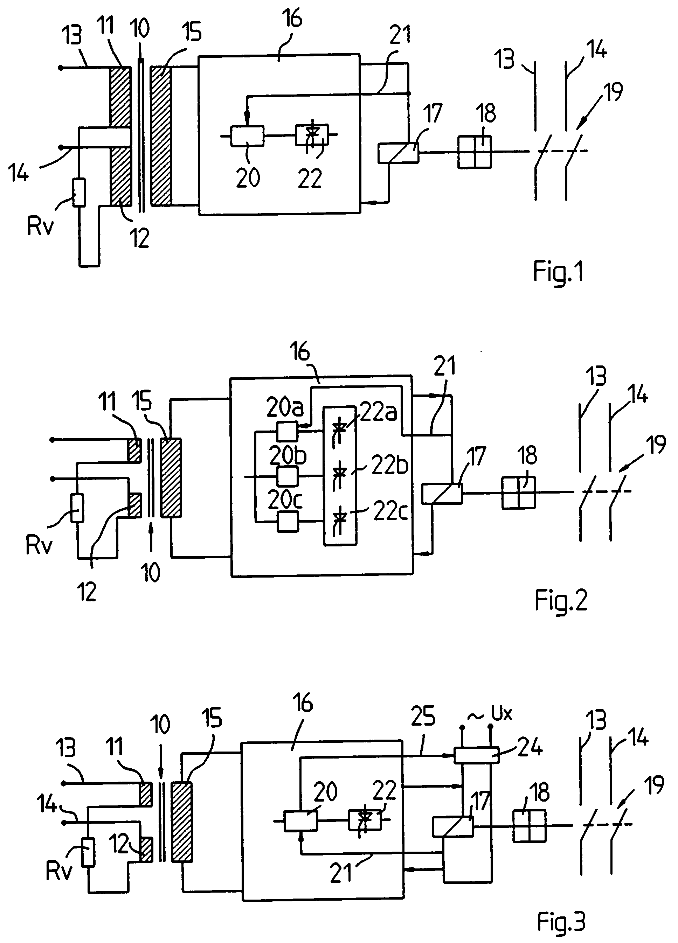

Die Schaltungsanordnungen der Figuren 1 bis 4 besitzen alle einen Wandler 10, dessen Primärwicklungen 11 und 12 durch die Netzleiter 13, 14 gebildet sind; die Sekundärwicklung 15 ist mit einer Speicherschaltung 16 verbunden. An der Speicherschaltung 16 angeschlossen ist jeweils ein Auslöserelais 17, welches mit einem Schaltschloß 18 gekoppelt ist, das auf eine Kontaktstelle 19 in der Netzleiter 13, 14 einwirkt. In den schematischen Darstellungen der Figuren ist eine Kontaktstelle mit zwei Leitern (zweipolig) dargestellt; selbstverständlich können die Schaltungsanordnungen auch in einem dreiphasigen Netz mit vier Kontaktstellen (vierpolig) eingesetzt werden.

Jede Speicherschaltung 16 enthält jeweils auch eine Auswerteschaltung 20, die mittels einer Signalleitung 21 mit dem Relais 17 verbunden ist, dergestalt, daß alle bei dem Auslösevorgang entstehenden Impulssignale über die Signalleitung 21 der Auswerteschaltung 20 zugeführt werden.

Wenn ein Fehlerstrom auftritt, dann wird ein in der Speicherschaltung 16 vorhandener Speicher (Kondensator) aufgeladen, der seine Energie über eine als Schwellwertschalter dienende Schaltstufe 22 an das Auslöserelais 17 abgibt. Dieser impulsartige Speicherentladestrom erzeugt im Auslöserelais 17 einen typischen Spannungsfall, der als erstes Impulssignal über die Signalleitung 21 an die Auswerteschaltung 20 zurückgemeldet und dort ausgewertet wird. Wenn das Auslöserelais 17 auslöst, dann wird sich der dem Auslöserelais zugeordnete Relaisanker (nicht dargestellt) bewegen, wodurch ein zweites (typisches) Impulssignal erzeugt wird, das ebenfalls an die Auswerteschaltung 20 über die Signalleitung 21 weitergegeben wird. Der Auslöseimpuls, also das erste Impulssignal einerseits, und das durch den Relaisanker hervorgerufene zweite Impulssignal, welche Signale im Millisekundenabstand aufeinanderfolgen, werden von der Auswerteschaltung 20 registriert. Fehlt das von der Ankerbewegung herrührende zweite Impulssignal, dann wird über die Auswerteschaltung 20 die Triggerschwelle in der Schaltstufe 22 erhöht, so daß die im Triggermoment im Speicher zu speichernde Energie ansteigt, so daß ein evtl. durch Alterung des Auslöserelais angestiegener Energiebedarf wieder gedeckt wird.

In der Speicherschaltung 16 können weitere Speicher sowie zugehörige Auswerteschaltungen 20a, 20b, 20c und Schaltstufen 22a, 22b, 22c vorgesehen sein, wie in Figur 2 dargestellt. Die Signalleitung 21 überträgt das zweite Impulssignal auf die Auswerteschaltungen 20a, 20b, 20c. Die weiteren Speicher sind so angelegt, daß sie mit jeweils höherer Speicherenergie gleichzeitig aufgeladen werden. Sie werden in steigender Folge von den Auswerteschaltungen 20a bis 20c über die zugeordneten Schaltstufen 22a, 22b, 22c abgerufen, bis das Auslöserelais 18 anspricht und der Anker abfällt und das zweite Impulssignal an die Auswerteschaltungen 20a, 20b, 20c übertragen wird.

Es besteht auch die Möglichkeit, eine weitere Speicherschaltung 24 mit erhöhter Sicherheit vorzusehen, die über eine Hilfsspannung Uₓ aufgeladen wird. Über eine Leitung 25 ist die Auswerteschaltung 20 mit der weiteren Speicherschaltung 24 verbunden; beim Ausbleiben des zweiten Impulssignals wird dann die Speicherschaltung 24 angesteuert und ein erhöhter Energieimpuls an das Auslöserelais 17 abgegeben.

Die Spannung Uₓ kann die Netzspannung sein, wobei zusätzlich noch ein Transformator vorgesehen sein kann (nicht dargestellt), damit das Netz galvanisch von der weiteren Speicherschaltung getrennt ist.

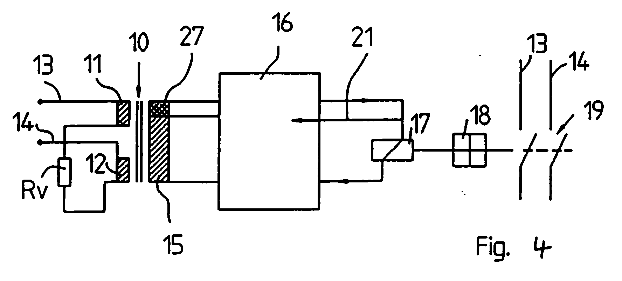

Eine weitere Möglichkeit zur Aufladung des oder der Speicher zeigt Figur 4. Zusätzlich zu der Sekundärwicklung 15 ist eine weitere Wicklung 27 auf den Kern des Magnetsystems aufgebracht, die von der Sekundärwicklung 15 elektrisch getrennt ist. Diese weitere Wicklung 27, die von der Primärwicklung 11, 12 getrennt am Wandler 10 angeordnet ist, erzeugt eine Hilfsspannung Uₐᵤₓ zur Aufladung des oder der Speicher. Die Speicherschaltung 24 kann dann auch bei Ausfall der Speicherschaltung 16 zur Auslösung herangezogen werden. In diesem Fall ist durch die Speicherschaltung 24 auch das Wiedereinschalten des Fehlerstromschutzschalters elektrisch verhindert.

## Patentansprüche

1. Fehlerstrom- oder Differenzstromschutzschalter, mit in einem wenigstens einen Hin- und einen Rückleiter (13, 14) aufweisenden Netz angeordneten Kontaktstellen (19), mit einem Wandler (10), dessen Primärwicklung (11, 12) durch die Netzleiter gebildet ist und dessen Sekundärwicklung (15) über eine Speicherschaltung (16) mit einem Auslöserelais (17) verbunden ist, und mit einem auf die Kontaktstellen (19) einwirkenden Schaltschloß (18), dessen Verklinkungsstelle von dem Auslöserelais (17) entklinkt wird, dadurch gekennzeichnet, daß die Speicherschaltung (16) eine Auswerteschaltung (20) enthält, die über eine Signalleitung (21) mit dem Auslöserelais (17) verbunden ist und die aufgrund der Auslösung des Auslöserelais beim Auslösevorgang auftretenden ersten und zweiten Impulssignale detektiert, wobei das erste Impulssignal vom Auslöseimpuls des Speichers und das zweite Impulssignal von der Abfallbewegung des Ankers des Auslöserelais herrührt, dergestalt, daß beim Ausbleiben des zweiten Impulssignales die von dem Speicher der Speicherschaltung (16) abgegebene Auslöseenergie erhöht wird.

2. Fehlerstrom- oder Differenzstromschutzschalter nach Anspruch 1, dadurch gekennzeichnet, daß der Speicherschaltung (16) ein veränderbarer Triggerschwellwertschalter (22) zugeordnet ist, und daß die Auswerteschaltung (20) den Schwellwert des Triggerschwellwertschalters bei Ausbleiben des zweiten Impulssignals soweit erhöht, bis eine Auslösung erfolgt.

3. Fehlerstrom- oder Differenzstromschutzschalter nach Anspruch 1, dadurch gekennzeichnet, daß der Speicherschaltung (16) wenigstens zwei Schwellwertschalter (22a, 22b, 22c) zugeordnet sind, deren Schwellwerte unterschiedlich sind, und daß bei Ausbleiben des zweiten Impulssignales der Schwellwertschalter mit dem höheren Schwellwert angesteuert wird.

4. Fehlerstrom- oder Differenzstromschutzschalter nach Anspruch 3, dadurch gekennzeichnet, daß jedem Schwellwertschalter (22a, 22b, 22c) ein eigener Speicher zugeordnet ist.

5. Fehlerstrom- oder Differenzstromschutzschalter nach einem der vorherigen Ansprüche, dadurch gekennzeichnet, daß der oder die Speicher der Speicherschaltung (16) mittels einer Hilfswicklung (27) des Wandlers (10) aufladbar sind.

6. Fehlerstrom- oder Differenzstromschutzschalter nach einem der Ansprüche 1 bis 4, dadurch gekennzeichnet, daß eine Hilfsspannungsquelle (Uₓ) vorgesehen ist, mit der der oder die Speicher der Speicherschaltung (16) und/oder ein weiterer Speicher (24) aufladbar sind.

7. Fehlerstrom- oder Differenzstromschutzschalter nach Anspruch 6, dadurch gekennzeichnet, daß die Hilfsspannungsquelle (Uₓ) das Netz ist.

8. Fehlerstrom- oder Differenzstromschutzschalter nach Anspruch 7, dadurch gekennzeichnet, daß ein Trenntransformator im Netz eingeschaltet ist, dessen Sekundärwicklung die Hilfsspannungsquelle ist und die Hilfsspannung erzeugt.

## Claims

1. Current-operated earth-leakage or residual-current circuit-breaker, having contact points (19) arranged in a mains having at least one outgoing and one return conductor (13, 14), having a transformer (10) whose primary winding (11, 12) is formed by the phase conductors and whose secondary winding (15) is connected via a storage circuit (16) to a tripping relay (17), and having a latching mechanism (18) which acts on the contact points (19) and whose latching point is unlatched by the tripping relay (17), characterized in that the storage circuit (16) contains an evaluation circuit (20) which is connected via a signal line (21) to the tripping relay (17) and which on the basis of the tripping of the tripping relay detects first and second pulse signals occurring during the tripping operation, it being the case that the first pulse signal is generated by the tripping pulse of the accumulator and the second pulse signal is generated by the dropping-out movement of the armature of the tripping relay in such a way that in the event of the absence of the second pulse signal the tripping energy supplied from the accumulator of the storage circuit (16) is increased.

2. Current-operated earth-leakage or residual-current circuit-breaker according to Claim 1, characterized in that the storage circuit (16) is assigned a variable trigger (22), and in that in the event of the absence of the second pulse signal the evaluation circuit (20) increases the threshold value of the trigger until tripping occurs.

3. Current-operated earth-leakage or residual-current circuit-breaker according to Claim 1, characterized in that the storage circuit (16) is assigned at least two triggers (22a, 22b, 22c) whose threshold values are different, and in that in the event of the absence of a second pulse signal the trigger is driven with the higher threshold value.

4. Current-operated earth-leakage or residual-current circuit-breaker according to Claim 3, characterized in that each trigger (22a, 22b, 22c) is assigned a dedicated accumulator.

5. Current-operated earth-leakage or residual-current circuit-breaker according to one of the preceding claims, characterized in that the accumulator or accumulators of the storage circuit (16) can be charged by means of an auxiliary winding (27) of the transformer (10).

6. Current-operated earth-leakage or residual-current circuit-breaker according to one of Claims 1 to 4, characterized in that an auxiliary supply source (Uₓ) is provided by means of which [lacuna] or the accumulators of the storage circuit (16) and/or a further accumulator (24) can be charged.

7. Current-operated earth-leakage or residual-current circuit-breaker according to Claim 6, characterized in that the auxiliary supply source (Uₓ) is the mains.

8. Current-operated earth-leakage or residual-current circuit-breaker according to Claim 7, characterized in that an isolating transformer is switched into the mains whose secondary winding is the auxiliary supply source and generates the auxiliary supply.

## Revendications

1. Disjoncteur à courant de défaut ou à courant différentiel comprenant des contacts (19) disposés dans un réseau présentant au moins un conducteur aller et un conducteur retour (13, 14), un transformateur (10) dont l'enroulement primaire (11, 12) est formé par les conducteurs de réseau et dont l'enroulement secondaire (15) est relié par un circuit d'accumulation (16) à un relais de déclenchement (17), et une serrure de commutation (18) qui agit sur les contacts (19) et dont le verrouillage est déverrouillé par le relais de déclenchement (17), caractérisé par le fait que le circuit d'accumulation (16) contient un circuit d'évaluation (20) qui est relié par une ligne de signal 21 au relais de déclenchement (17) et qui détecte les premier et deuxième signaux impulsionnels se produisant lors de l'opération de déclenchement par suite du déclenchement du relais de déclenchement, le premier signal impulsionnel provenant de l'impulsion de déclenchement de l'accumulateur, et le deuxième signal impulsionnel du mouvement de relâchement de l'armature du relais de déclenchement, de telle manière qu'en l'absence du deuxième signal impulsionnel, l'énergie de déclenchement émise par l'accumulateur du circuit d'accumulation (16) se trouve accrue.

2. Disjoncteur à courant de défaut ou à courant différentiel suivant la revendication 1, caractérisé par le fait qu'un interrupteur à seuil (22) à valeur de seuil variable est associé au circuit d'accumulation (16) et que le circuit d'évaluation 20 augmente la valeur de seuil de l'interrupteur à seuil, en l'absence du deuxième signal impulsionnel, jusqu'à ce qu'un déclenchement ait lieu.

3. Disjoncteur à courant de défaut ou à courant différentiel suivant la revendication 1, caractérisé par le fait qu'au moins deux interrupteurs à seuil (22a, 22b, 22c) sont associés au circuit d'accumulation (16), interrupteurs dont les valeurs de seuil sont différentes, et que l'interrupteur à seuil ayant la valeur de seuil plus élevée est commandé en l'absence du deuxième signal impulsionnel.

4. Disjoncteur à courant de défaut ou à courant différentiel suivant la revendication 3, caractérisé par le fait qu'un accumulateur séparé est associé à chaque interrupteur à seuil (22a, 22b, 22c).

5. Disjoncteur à courant de défaut ou à courant différentiel suivant l'une des revendications précédentes, caractérisé par le fait que le ou les accumulateur(s) du circuit d'accumulation (16) peuvent être chargés au moyen d'un enroulement auxiliaire (27) du transformateur (10).

6. Disjoncteur à courant de défaut ou à courant différentiel suivant l'une des revendications 1 à 4, caractérisé par le fait qu'il est prévu une source de tension auxiliaire (Uₓ) pour le chargement du ou des accumulateur(s) du circuit d'accumulation (16) et/ou d'un accumulateur supplémentaire (24).

7. Disjoncteur à courant de défaut ou à courant différentiel suivant la revendication 6, caractérisé par le fait que la source de tension auxiliaire (Uₓ) est constituée par le réseau.

8. Disjoncteur à courant de défaut ou à courant différentiel suivant la revendication 7, caractérisé par le fait qu'un transformateur de séparation est intercalé dans le réseau, transformateur dont l'enroulement secondaire constitue la source de tension auxiliaire et produit la tension auxiliaire.
